# EUROPEAN PATENT APPLICATION

(11) **EP 4 745 773 A1**
(43) Date of publication of application: **20.05.2026**
(21) Application number: 25191779.5
(22) Date of filing: 25.07.2025
(51) Int. Cl.: G06F 9/50, G06F 8/65

(54) **CLUSTER SEPARATION OF DATA PLANE AND APPLICATION MANAGEMENT CONTROL PLANE**

(30) Priority: 14.11.2024 US 202418948306
(71) Applicant: SAP SE, 69190 Walldorf (DE)
(72) Inventor: FAHLBUSCH, Jannick Stephan, 69190 Walldorf (DE); GECKELER, Florian, 69190 Walldorf (DE)
(74) Representative: Müller-Boré & Partner Patentanwälte PartG mbB

(57) **Abstract**

The present disclosure provides techniques and solutions for reducing coupling between an application management control plane and a data plane in a hyperscale computing environment. The hyperscale computing environment includes a first data plane hyperscale cluster with a plurality of physical or virtual servers hosting a first software application, and a first communication controller. The hyperscale computing environment also includes an application management control plane cluster with a plurality of physical or virtual servers hosting a second software application that supports the first software application, and a second communication controller. The second communication controller routes operations from the second software application to the first communication controller, which then routes them to the first software application. **In** some cases, management operations for the data plane are only executed when originating from the application management control plane. In further cases, management operations are only sent at the request of the data plane.

## Description

### FIELD

The present disclosure generally relates to managing hyperscale computing environments. Particular implementations relate to deployments where a data plane and an application management control plane are located in different hyperscale clusters.

### BACKGROUND

Hyperscale computing refers to the ability of a computing infrastructure to scale rapidly and efficiently to meet increasing demand. In a hyperscale environment, numerous physical and virtual servers are networked together to form a distributed computing system capable of handling massive workloads. This approach is characterized by the ability to scale up or down in response to varying levels of demand, which is important for handling modern data-intensive applications such as databases, machine learning, and large-scale web services. Hyperscale infrastructures often span multiple data centers, sometimes across different geographic regions, to provide redundancy, fault tolerance, and optimal resource utilization.

Cloud computing builds on the principles of hyperscale by providing on-demand access to computing resources over the internet. Cloud computing abstracts away the complexities of managing hardware, storage, and networking infrastructure by allowing users to access resources as a service. This can be used to provide a "pay-as-you-go" model that reduces the need for companies to invest in costly physical infrastructure, while offering the flexibility to quickly scale resources to meet changing needs. The efficiency of cloud computing comes from its ability to pool resources and dynamically allocate them to different users and applications based on demand. This elastic nature makes it useful for businesses that need to manage unpredictable workloads without committing to specific amounts of physical infrastructure.

In a typical hyperscale cloud environment, the architecture is organized into several layers or planes that work together to ensure efficient management and execution of applications. The orchestration control plane manages the underlying infrastructure and coordinates the allocation of resources across the cluster. It handles tasks such as scheduling workloads, monitoring system health, and ensuring that applications are deployed in accordance with their specified configurations. The application management control plane operates alongside the orchestration control plane and oversees the lifecycle of specific applications, including those that run in the data plane. This plane handles functions such as monitoring application performance, managing backups, and ensuring that applications remain operational by managing their configurations and dependencies.

The data plane is the layer where the core client-facing applications and services run, handling the data processing, transactions, and requests that make up the operational workload of the cloud environment. Applications in the data plane use the orchestration control plane to manage resources and rely on the application management control plane for operational needs, such as backup and recovery. Disruptions to data plane applications can arise from a variety of operations, particularly during maintenance tasks such as software updates. Updates to components in the orchestration control plane or application management control plane can indirectly or directly affect the applications running in the data plane, depending on the architecture and configuration of the cluster. These disruptions arise because both the orchestration control plane and the application management control plane influence the functioning of the data plane, where client-facing applications like databases are executed.

While these control planes provide mechanisms to minimize downtime, there remains a risk that even planned maintenance operations can temporarily disrupt the services that users rely on. Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

The present disclosure provides techniques and solutions for reducing coupling between an application management control plane and a data plane in a hyperscale computing environment. The hyperscale computing environment includes a first data plane hyperscale cluster with a plurality of physical or virtual servers hosting a first software application, and a first communication controller. The hyperscale computing environment also includes an application management control plane cluster with a plurality of physical or virtual servers hosting a second software application that supports the first software application, and a second communication controller. The second communication controller routes operations from the second software application to the first communication controller, which then routes them to the first software application. In some cases, management operations for the data plane are only executed when originating from the application management control plane. In further cases, management operations are only sent at the request of the data plane.

In one aspect, the present disclosure provides a process of sending management operations from an application management control plane hyperscale cluster to a data plane hyperscale cluster. For a first application of an application management plane of an application management control plane hyperscale cluster, a first communication that includes a management operation for a second software application is sent to a first communication controller. The first communication controller services the application management control plane cluster.

A second communication is sent from the first communication controller to a second communication controller servicing a data plane hyperscale cluster. The data plane includes the second software application, and the second communication includes the management operation. The second communication controller receives the second communication and sends a third communication to the second software application. The third communication includes the management operation. The management operation is executed for the second software application.

In another aspect, the present disclosure provides a computing environment that includes a first data plane hyperscale cluster. This first data plane hyperscale cluster includes a first plurality of physical servers, virtual servers, or a combination thereof. The first data plane computing cluster has a first data plane that hosts a first software application. The first data plane hyperscale cluster does not include an application management control plane that supports operations of the first software application. Additionally, the first data plane hyperscale cluster includes a first communication controller.

The computing environment also includes an application management control plane cluster. This cluster includes a second plurality of physical servers, virtual servers, or a combination thereof. The application management control plane cluster has a first application management control plane that hosts a second software application that supports operations of the first software application and does not include the first software application. The application management control plane cluster also includes a second communication controller. The second communication controller receives an operation from the second software application and routes the operation to the first communication controller. The first communication controller then routes the operation to the first software application.

The present disclosure also includes computing systems and tangible, non-transitory computer readable storage media configured to carry out, or including instructions for carrying out, an above-described method. As described herein, a variety of other features and advantages can be incorporated into the technologies as desired.

### BRIEF DESCRIPTION OF THE DRAWINGS

FIG. 1 is a diagram of a hyperscale cluster that includes both a data plane and an application management control plane.
FIG. 2 is a diagram illustrating a hyperscale computing environment that includes a data plane cluster, having a data plane, and an application management plane cluster, having an application management plane, where the clusters communicate through respective communication controllers..
FIG. 3 provides example routing information for a communication control of an application management plane cluster, where the routing information includes addresses for both a communication controller of a data plane cluster and for endpoints, such as applications, of the data plane.
FIG. 4 provides example routing information for a communication controller of an application management control plane cluster and for a communication controller of a data plane cluster, where the application management control plane routing information includes routing information for the communication controller of the data plane cluster, and routing information for the data plane cluster includes addresses of endpoints of the data plane.
FIG. 5 illustrates various deployment options for a data plane cluster and an application management control plane cluster.
FIG. 6 illustrates how data planes of multiple data plane computing clusters can be managed by a single application management control plane of an application management control plane cluster, and how a data plane cluster can be selectively in communication with different application management control planes of different application management control plane clusters.
FIG. 7 is a flowchart of a process of sending management operations from an application management control plane hyperscale cluster to a data plane hyperscale cluster.
FIG. 8 is a diagram of an example computing system in which some described embodiments can be implemented.
FIG. 9 is an example cloud computing environment that can be used in conjunction with the technologies described herein.

### DETAILED DESCRIPTION

### Example 1- Overview

Hyperscale computing refers to the ability of a computing infrastructure to scale rapidly and efficiently to meet increasing demand. In a hyperscale environment, numerous physical and virtual servers are networked together to form a distributed computing system capable of handling massive workloads. This approach is characterized by the ability to scale up or down in response to varying levels of demand, which is important for handling modern data-intensive applications such as databases, machine learning, and large-scale web services. Hyperscale infrastructures often span multiple data centers, sometimes across different geographic regions, to ensure redundancy, fault tolerance, and optimal resource utilization.

Cloud computing builds on the principles of hyperscale by providing on-demand access to computing resources over the internet. Cloud computing abstracts away the complexities of managing hardware, storage, and networking infrastructure by allowing users to access resources as a service. This can be used to provide a "pay-as-you-go" model that reduces the need for companies to invest in costly physical infrastructure, while offering the flexibility to quickly scale resources to meet changing needs. The efficiency of cloud computing comes from its ability to pool resources and dynamically allocate them to different users and applications based on demand. This elastic nature makes it useful for businesses that need to manage unpredictable workloads without committing to specific amounts of physical infrastructure.

The use of hyperscale and cloud computing continues to grow due to the rise of data-driven applications and the increasing complexity of software systems. Enterprises need to process ever-larger volumes of data, run more complex algorithms, and deliver services to users in real-time, all of which require immense computational power. Hyperscale cloud environments allow these enterprises to offload infrastructure management to cloud providers who specialize in maintaining the necessary scale, security, and efficiency. The ongoing shift toward cloud-native development, which emphasizes microservices, containerization, and distributed systems, further accelerates this trend, as modern applications are designed from the ground up to operate in hyperscale cloud environments.

Hyperscale computing can execute mission-critical software applications, and operations, such as software updates, which might cause application downtime and can be of significant concern. In a typical hyperscale cloud environment, the architecture is organized into several layers or planes that work together to ensure efficient management and execution of applications. The orchestration control plane manages the underlying infrastructure and coordinates the allocation of resources across the cluster. It handles tasks such as scheduling workloads, monitoring system health, and ensuring that applications are deployed in accordance with their specified configurations. The orchestration control plane is responsible for managing the physical and virtual servers that make up the cluster, as well as automating much of the infrastructure management.

The application management control plane operates alongside the orchestration control plane and oversees the lifecycle of specific applications, including those that run in the data plane. The application management control plane handles functions such as monitoring application performance, managing backups, and ensuring that applications remain operational by managing their configurations and dependencies. Services in the application management control plane may include automated tasks such as scaling applications to meet demand, recovering from failure, and performing regular maintenance operations. These services interact with the data plane, where the actual workloads, such as databases or web services, are executed.

The data plane is the layer where the core client-facing applications and services run, handling the data processing, transactions, and requests that make up the operational workload of the cloud environment. Applications in the data plane use the orchestration control plane to manage resources and rely on the application management control plane for operational needs, such as backup and recovery.

Disruptions to data plane applications can arise from a variety of operations, particularly during maintenance tasks such as software updates. Updates to components in the orchestration control plane or application management control plane can indirectly or directly affect the applications running in the data plane, depending on the architecture and configuration of the cluster. These disruptions arise because both the orchestration control plane and the application management influence the functioning of the data plane, where client-facing applications like databases are executed. Updates to any of these control planes can affect the availability and performance of applications in the data plane. While these control planes provide mechanisms to minimize downtime, there remains a risk that even planned maintenance operations can temporarily disrupt the services that users rely on.

Kubernetes is an open-source platform designed to automate deploying, scaling, and operating application containers. It orchestrates the interaction between nodes and pods in the data and application management planes, ensuring that applications are scheduled and monitored effectively. Kubernetes components such as the API server, scheduler, and controller manager are used in maintaining the desired state of the cluster and managing resources.

When performing updates to Kubernetes components in the orchestration control plane, such as the API server, scheduler, or controller manager, the entire cluster can experience disruptions. Kubernetes is responsible for orchestrating the interaction between nodes and pods in the data and application management planes, so any update to these components directly impacts how applications are scheduled and monitored. For instance, updating the scheduler can interfere with the placement of new or rescheduled pods, including those running mission-critical applications like databases.

Without a functioning scheduler, the cluster may not be able to handle new workload requests or redistribute workloads in case of node failures. Similarly, if the controller manager is being updated, which maintains the desired state of the cluster, issues like node failures or pod replication problems could go unnoticed, potentially causing service degradation. Updates to the kubelet (the node agent running on each node) can be particularly problematic, as they often require a restart of the node itself. Any containers running on that node, including database applications, would be interrupted during the restart process, leading to temporary downtime or degraded performance.

On the surface, updating services within the application management control plane, such as those responsible for backup, monitoring, or recovery, may seem less disruptive because these services are often isolated from the data plane. If the application management services are running in separate pods on different nodes from the database application, an update should, in theory, not interfere directly with the database's operation. However, in practice challenges can still arise.

Interdependencies between the application management services and the data plane can cause disruptions during an update. For example, a database backup service may require direct access to the database during its operations. If the backup service is being updated, the process might require reinitializing connections or restarting the service. Even though the database remains online, the disruption in the backup service's functionality can result in failed or incomplete backups, especially during high-load periods when the database is actively processing data.

Similarly, services responsible for monitoring the database may depend on continuous communication with the data plane. During an update, this synchronization might be lost, causing temporary gaps in performance tracking or alerting, which could allow critical issues to go undetected. Additionally, these services often track and manage the current state of the database to ensure tasks such as backup, recovery, and scaling are executed properly. During an update, however, there is the risk of losing this synchronization. For instance, if a backup service is actively performing a backup during an update, the disruption can lead to the backup process being interrupted or delayed. While the database may continue to operate normally, the absence of key management services can impact its ability to perform routine maintenance or recover from potential issues.

Restart times for application management services also play a role in the risk of disruptions. Even though the application management service and the database itself might be decoupled, the time taken to restart a service after an update could cause temporary functionality gaps. For example, a monitoring service update could cause the service to miss important database performance metrics or alerts during the restart window, potentially delaying the detection of performance bottlenecks or other issues that would otherwise be caught in real time.

Several strategies are often used to mitigate the risk of disruptions during maintenance operations, such that data plane applications remain operational. One common approach is to shift workloads to different nodes within the cluster during updates. By redistributing the running applications to nodes that are not undergoing maintenance, the orchestration control plane can minimize the impact of updates on the data plane. However, this approach requires sufficient available resources across the cluster, and in smaller clusters or during periods of high demand, this may not be possible without straining resources. Additionally, shifting workloads can introduce latency or brief interruptions during the transfer process, which may not be suitable for applications requiring high levels of real-time performance.

Another strategy involves using redundancy and replication to ensure that if one instance of an application is disrupted, another instance can take over without interruption. By maintaining multiple replicas of key services across different nodes or clusters, the system can seamlessly continue operations even if one node becomes temporarily unavailable due to updates or other maintenance activities. However, maintaining redundant instances increases resource overhead and operational costs, as additional infrastructure must be provisioned to host the replicas. Additionally, real-time synchronization between replicas, particularly in databases, can introduce latency, complexity, and potential performance degradation.

Rolling updates are another method commonly used to avoid widespread disruptions. In a rolling update, individual pods or services are updated one at a time, rather than all at once. This allows only a small portion of the system to be taken offline at any given time, allowing the rest of the services to continue running as normal. However, rolling updates can extend the overall time required to fully deploy an update, and there is a risk of inconsistencies during the update process if dependencies between different parts of the application are not carefully managed. Additionally, the staggered approach may not be effective in situations where the update affects critical components that must be updated simultaneously.

In certain scenarios, workload migration to different clusters or regions may be needed, particularly if the maintenance tasks involve updates to the core components of the orchestration control plane. Migrating workloads to a separate, fully operational cluster allows updates to be performed without impacting the active services. This approach, however, can be resource-intensive and complex to manage, especially when migrating large-scale workloads across geographic regions. Moreover, the migration process itself can introduce delays and potential disruptions, particularly in the case of applications that require low-latency responses.

In cases where workload migration or replication is not feasible, scheduled maintenance windows are often used. By performing updates during periods of low demand, the impact of any disruptions can be minimized. However, this approach requires careful planning and may not be suitable for applications that require continuous availability, as even brief periods of downtime may be unacceptable for certain services. Furthermore, predicting low-demand periods can be difficult in global, 24/7 environments where user traffic is unpredictable.

One of the more challenging aspects of managing updates in a hyperscale cluster is when it is desired to avoid shifting workloads to other nodes or clusters. While shifting workloads to unaffected nodes is a common strategy to minimize disruption, including during software updates, some clusters may not have the spare resources or redundancy to do this seamlessly. To update components in place without workload migration introduces further risks. For example, updating Kubernetes components like the kubelet without shifting the workloads it manages means that any applications on that node will experience downtime during the update. If application management services and the database are running on the same node, an update could cause both to be disrupted simultaneously, resulting in service degradation or failure.

Resource contention during updates is another concern. Even if the database and application management services are running on separate nodes, for example, they still share the underlying infrastructure of the cluster. Updating an application management service, such as a backup or recovery service, may temporarily spike CPU, memory, or network usage, affecting the performance of the database. This is especially true if resources are already near capacity or if the services are highly interdependent. The database might remain online, but its performance could degrade if the cluster's overall resources are strained during the update process.

Additionally, Kubernetes pod disruptions can arise even though Kubernetes is designed to minimize downtime during updates. Updating components like the kube-proxy, which manages networking between pods, or the kubelet, which manages pod health, could lead to pod evictions or restarts. This is particularly problematic for stateful applications like databases, which typically rely on continuous, consistent operation. Although the pods themselves may remain online, disruptions in networking or node-level management can cause delays, failed transactions, or degraded service during the update process.

The present disclosure provides techniques and solutions for managing hyperscale computing environments by separating the data plane and the application management control plane into distinct clusters, each with its own orchestration control plane. This separation allows for independent updates to the application management control plane and its orchestration control plane without affecting the data plane, thereby minimizing downtime and maintaining the availability of client-facing applications. By isolating these planes into separate clusters, the system allows critical updates and maintenance operations to be performed on the application management control plane without disrupting the operational workload handled by the data plane.

The data plane cluster and the application management control plane cluster can communicate through communication controllers within each cluster. These communication controllers facilitate the routing of messages between the data plane cluster and the application management control plane cluster. The communication controllers maintain mapping information that allows them to efficiently route communications to the appropriate endpoints within the respective clusters. This design not only simplifies the communication process but also enhances the scalability and flexibility of the system by allowing clusters to operate independently while still maintaining necessary interactions.

The present disclosure also provides the ability to configure the data plane cluster as read-only, where actions originating from the data plane are allowed to read configuration information, but may not change configuration or perform management options. In particular, management operations may be limited to those originating an application management control plan responsible for the data plane. This configuration enhances security by ensuring that users with access to the data plane do not have direct access to the management services of the application management control plane. By maintaining management functionality in a separate cluster, the system protects against unauthorized access and potential security breaches. This separation of concerns provides that, even if a user gains unauthorized access to the data plane, they cannot compromise the management operations, which are securely isolated in the application management control plane cluster.

Furthermore, the communication between the clusters can be set up such that the data plane initiates contact with the application management control plane for management operations. By providing that the data plane to requests management services, the system reduces the risk of unauthorized access to data in the data plane.

### Example 2- Example Hyperscale Cluster

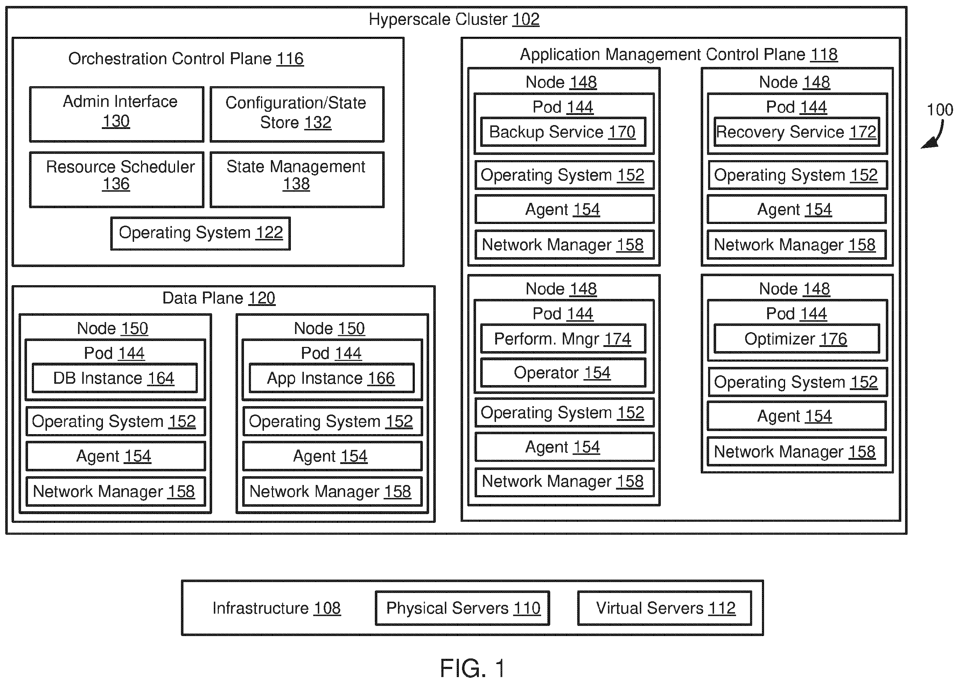

FIG. 1 is a diagram of a typical hyperscale environment 100. The hyperscale environment 100 includes physical infrastructure 108 made up of physical servers 110 and virtual servers 112. These servers can host processes, such as serving as master nodes, associated with both an orchestration control plane 116 and an application management control plane 118. The physical servers 110 and virtual servers 112 also serve as compute nodes for a data plane 120 that has applications that are available to clients, and which are management by the application management control plane 118. Although FIG. 1 shows the inclusion of virtual servers 112, it should be noted that a cluster environment 100 can consist only of physical servers 110.

The physical infrastructure 108 is managed such that numerous physical and virtual servers together form a large-scale computing system designed to handle massive workloads. These servers are organized into clusters, which are often highly distributed and can span multiple data centers or geographic regions. The clusters are managed as a unit by orchestration software, such as Kubernetes, which is responsible for handling the deployment, scaling, and management of applications across the cluster. In FIG. 1, this software is represented as the orchestration control plane 116.

The overall hyperscale environment 100 corresponds to a single cluster, 102. In general, a hyperscale cluster includes at least an orchestration control plane 116 and typically also includes both an application management control plane 118 and a data plane 120. In some scenarios, the application management control plane 118 may be omitted.

As an example, consider a scenario where a database application such as SAP HANA CLOUD runs in the data plane 120. The application management control plane 118 manages instances of the database application by handling operations such as backup, recovery, and performance monitoring.

The orchestration control plane 116, for example using Kubernetes, provides the environment in which the application management control plane 118 and data plane 120 operate. The orchestration control plane 116 is responsible for identifying and organizing infrastructure 108 for the cluster. Kubernetes is used in this example to demonstrate how containers are orchestrated across physical and virtual infrastructure, but similar software may be used for containerized environments.

Kubernetes is a container orchestration platform designed to manage applications and services that run inside containers, which are lightweight, portable execution environments. Each container includes an application and its dependencies, such as libraries, environment variables, and configuration files, isolated from other containers running on the same node. By bundling the application and its dependencies, containers allow for applications to run consistently across different environments, avoiding issues related to missing dependencies or differing software versions on the host systems. Kubernetes uses a master-worker architecture, in which the cluster is composed of master nodes (orchestration control plane) and worker nodes (data plane).

The orchestration control plane 116 runs on top of an operating system 122. The operating system 122, and components of the orchestration control plane, can run on top of the infrastructure 108. The orchestration control plane 116 includes an administrative interface 130, such as the Kubernetes API server, which acts as the entry point for administrative tasks in the cluster. This interface exposes Kubernetes APIs to users and other system components, allowing them to manage the deployment of applications, request scaling of resources, and perform other administrative tasks.

A configuration/state store 132, such as etcd in Kubernetes, is a distributed key-value store that holds configuration data for the cluster. This store includes the desired state of each workload, current resource usage, and other metadata that can be referenced by the orchestration control plane 116 to maintain the cluster's state. A resource scheduler 136, such as the Kubernetes scheduler, is responsible for determining which nodes in the data plane 120 should run a given workload based on available resources and other constraints. Once the scheduler 136 makes a decision, it assigns the workload to a specific worker node in the data plane 120.

Kubernetes orchestrates applications by managing them inside a unit called a "pod", shown as pods 144. A pod 144 is the smallest deployable unit in Kubernetes and typically contains one or more containers (not explicitly shown, but which contain management or data plane applications) that work together. Each container inside the pod 144 is responsible for running an application or part of an application. Pods 144 are designed to be lightweight, sharing certain resources like storage volumes, networking configurations, and environment settings across all the containers in the pod. All containers within a pod 144 share the same network namespace, which allows them to communicate with each other using localhost, while still being isolated from containers in other pods.

Pods 144 are deployed to worker nodes 150 in the data plane, as well as master nodes 148 of the application management control plane 118. In the data plane 120, the pods 144 run the actual workloads that process client data or perform operations such as database queries. In the application management control plane 118, the pods 144 run applications that manage applications of the data plane 120. Pods 144 are ephemeral by design, meaning they can be easily rescheduled or recreated in case of failures, making Kubernetes highly resilient.

The orchestration control plane 116 includes a state management component 138, such as the controller manager of Kubernetes, which is response for maintaining the cluster in a desired state. The state management component 138 can operate a set of controllers, each responsible for managing different aspects of the cluster 102, such as maintaining proper pod replication, handling node failures, or managing resource allocation. In a hyperscale environment, the controller manager automates responses to changing conditions, such as increasing the number of database instances in response to higher traffic.

Applications and services within the application management control plane 118 and the data plane 120 operate within nodes 148, 150, which correspond to computing resources of the infrastructure 108. Each node 148, 150 runs its own operating system (OS) 152, typically a container-optimized OS that supports the execution of containers and pods. These nodes host the pods 144, which in turn run the applications or management services. The OS on each node ensures efficient resource management and networking for the pods running on it. In FIG. 1, the data plane 120 is shown as having a node 150 that includes a database instance 164 and a node that includes another type of application instance 166.

Node 148, 150 includes a node agent 154, such as a Kubernetes kubelet. The kubelet acts as the node agent, performing monitoring and controlling operations such that containers in its pods 144 are healthy and aligned with the desired configuration specified by the orchestration control plane 116. If a pod 144 or container fails, the kubelet will communicate with the orchestration control plane 116 to restart the container or reschedule it on another node. Each node 148, 150 also includes a network manager 158, such as a kube-proxy in Kubernetes, which manages network communication between pods 144, ensuring that applications can communicate both within and outside the cluster.

It is common for both the data plane 120 and the application management control plane 118 to share the same underlying hardware infrastructure, although they are logically separated to provide operational independence. This means that a single physical or virtual server might host both data plane workloads (such as database instances) and management components (such as the API server or scheduler), but they operate in isolation from one another.

In the pods 144, software implementing an operator pattern 154, which for simplicity is only shown for a single pod in FIG. 1, is often used to manage complex applications, such as databases. An operator 154 is a custom controller that extends Kubernetes' functionality to automate the management of applications beyond basic deployment. For example, an operator 154 for a database application can manage the lifecycle of SAP HANA Cloud instances in the data plane 120, performing tasks such as scaling, patching, and backup management.

The application management control plane 118 runs alongside the orchestration control plane 116 and code implementing the operator pattern 154. For example, services in the application management control plane 118 can handle specialized database operations, such as a backup service 170, a recovery service 172, a performance monitoring service 174, and an optimization service 176. These services interact with Kubernetes when appropriate, such as when additional resources are needed from the data plane to perform a backup or recovery operation. As will be further explained, the operator pattern 154 can be used to help maintain operation of client-facing applications in the absence of communications from the application management control plane 118, such as when the application management control plane 118 or associated components are being updated.

An example of an operator pattern 154 is described for an in-memory database management system in U.S. Patent No. 11,537,437, incorporated by reference here. This patent describes an in-memory database operator that uses a reconcile function, an operator pattern 154, to manage the lifecycle of database instances, such as those running in the data plane 120 of a Kubernetes cluster.

As described, the Kubernetes orchestration control plane 116 orchestrates the infrastructure 108, and handles the deployment, scaling, and monitoring of applications, while the application management control plane 118 focuses on more specific management tasks, such as those used for a database application, including backup, recovery, and optimization. In this setup, the interaction of the orchestrator control plane 116 with the data plane 120 is largely focused on ensuring that database instances, such as SAP HANA Cloud, are provisioned and maintained according to predefined requirements.

The reconcile process of the patent describes how database management tasks are automated and continuously monitored to ensure the system operates as intended. Specifically, the in-memory database operator is responsible for ensuring that the state of the database matches the desired configuration specified by the user. This operator 154 runs within a pod 144 in the application management control plane 118 or the data plane 120 and interacts with the Kubernetes orchestration control plane 116 to orchestrate database operations.

When a change is detected (such as a request to create a new database instance, modify its configuration, or perform a maintenance task), the operator 154 initiates the reconcile function. This function checks the current state of the database instance and compares it with the desired state, then triggers a series of component handlers that perform specific tasks required to align the system with the desired state. For example, if the user requests a backup, the reconcile function would execute component handlers responsible for preparing the database, executing the backup, and storing the backup in the appropriate location. Note that, in disclosed techniques, this can allow some functionality typically associated with the application management control plane 118 to be incorporated into an operator pattern 154, including in a pod 144 of the data plane 120. In some cases, the operator pattern 154 and services of the application management control plane 118 can overlap, including where one component has more extensive functionality than another component, or functionality can be solely in one component.

The component handlers described in the patent are modular functions that manage different aspects of the database lifecycle. Each handler validates specific requirements for the database resource and performs operations such as:
- Setting up database storage and managing persistent volumes in Kubernetes.
- Configuring authentication mechanisms, such as generating and updating passwords for database users.
- Creating Kubernetes deployments to ensure the database instance is properly configured and scheduled across worker nodes in the data plane.
- Managing the database's network services to ensure it can communicate with other components inside and outside the cluster.

If any of these component handlers fail, the reconcile function triggers retries until the operation succeeds, thus maintaining the desired state of the database instance.

The reconcile process operates without maintaining state between operations, meaning that each time the reconcile function is invoked, it evaluates the entire database instance from scratch to ensure consistency. This stateless approach allows for greater flexibility and resilience in large-scale deployments where workloads are distributed across multiple nodes.

As noted, the functionality of an operator pattern 154, including the reconcile function described in U.S. Patent No. 11,537,437, can differ from tasks that are initiated directly by the application management control plane 118 services. The reconcile function within the operator pattern 154 focuses on maintaining the overall desired state of the database instance. The operator continuously monitors the current state of the system and triggers the reconcile function whenever there is a detected divergence between the current state of the database and the desired configuration. This divergence could be caused by external events, failures, or manual changes that disrupt the system's configuration or operational status. When invoked, the reconcile function calls upon specific component handlers-modular processes that handle specific lifecycle tasks such as provisioning storage, creating deployments, or managing authentication. The purpose of the reconcile function is to automatically align the current state of the database with its intended state, without requiring human intervention. It is a continuous process, driven by changes in the environment or system that affect the overall health and configuration of the database.

In contrast, tasks initiated directly by services of the application management control plane 119, such as database management components such as backup, restore, or performance optimization operations, tend to be specific, user-initiated or scheduled actions that serve a targeted purpose rather than maintaining the system's overall state. These tasks might be triggered in response to a predefined schedule (e.g., daily backups), manual user requests (e.g., triggering a restore operation), or operational events (e.g., database performance degradation). While these tasks help maintain database health and reliability, they do not operate in the same automated, continuous cycle as the reconcile function. Instead, they are executed as discrete operations that fulfill specific requirements for database management.

For example, a backup operation might be scheduled to run at regular intervals to ensure data integrity and recovery options. This operation is initiated by the application management control plane 118, either based on a user-defined schedule or manual request. The reconcile function, however, is not responsible for managing the execution of such tasks unless the backup process somehow affects the overall state of the system (such as causing resource imbalances that need to be corrected). Similarly, restore tasks are directly managed by database administrators through the application management control plane 118 and serve the specific purpose of recovering data, rather than maintaining the system's state. The operator's reconcile function would typically not be involved unless the restore process caused inconsistencies that needed to be addressed.

While the reconcile function is designed to manage the broader lifecycle of the database instance and ensure consistency between the actual and desired state, direct tasks initiated by database management components are focused on handling specific operational needs. These operations often exist outside the general lifecycle management handled by the operator and may interface with the operator only if they cause changes to the database's overall configuration.

In addition to the operator-based automation described above, further management and orchestration techniques are described in U.S. Patent Application Publication No. US20220321645A1, incorporated by reference herein, which describes a cloud-based environment where a provider, such as a company providing database management services and user-specific environments (workload clusters) are kept distinct, but function cooperatively. For example, the management plane can manage the lifecycle of services and database instances running in the user's environment (data plane), using limited access credentials.

The technique uses specific, credential-based permissions, allowing the provider to deploy and manage instances of application platforms (e.g., SAP HANA CLOUD or similar databases), but does not allow full access to user data. This separation enhances security and operational control, where the management plane manages important functions such as provisioning database instances, triggering backups, performing software updates, and recovering from system failures without directly accessing user data.

Despite Kubernetes sophisticated orchestration capabilities, certain challenges arise when updating components of the cluster, such as the kubelet on worker nodes 150 or the operating system kernel. These updates often require a node restart, leading to temporary downtime for containers running on that node. While Kubernetes can reschedule workloads on other nodes, this may not always be feasible due to resource constraints, potentially causing service disruption.

In large-scale clusters that span hundreds or thousands of nodes, the complexity of managing updates across all components increases. Updates are coordinated to minimize the impact on both the data plane 120 and the application management control plane 118, such as to provide highly available database services even during system updates or failures. However, this coordination can be very complex.

### Example 3 - Example Separation of Data Plane and Application Management Control Plane into Separate Hyperscale Clusters

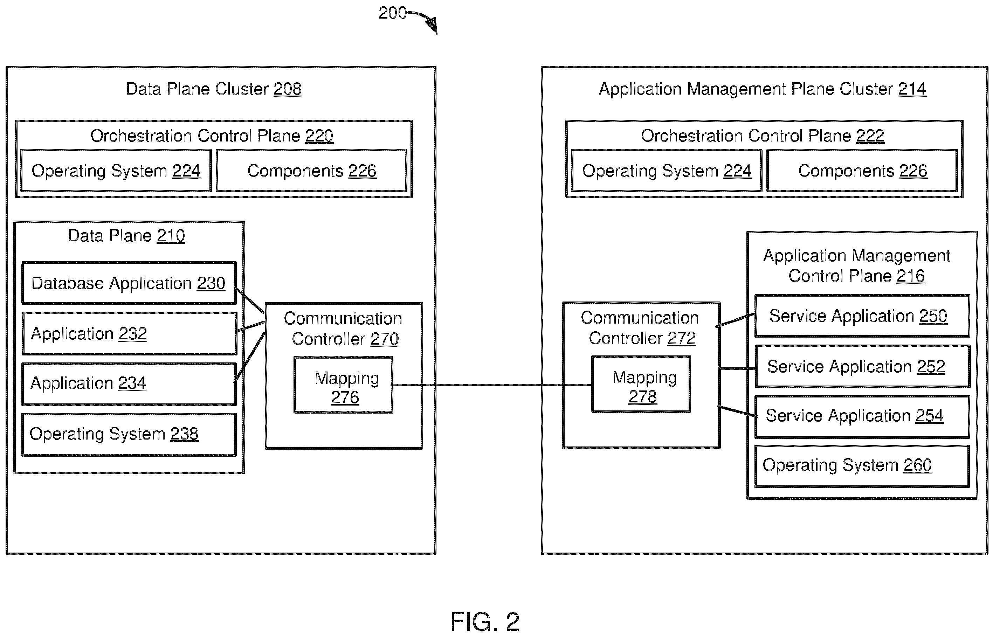

FIG. 2 illustrates a hyperscale computing environment 200 according to the present disclosure. The hyperscale computing environment 200 is shown in a simplified manner as compared with the cluster environment 100 of FIG. 1. However, the hyperscale computing environment 200 can include components similar to those in the cluster environment 100.

A difference between the hyperscale computing environment 200 and the cluster environment 100 is that the computing environment 200 includes a cluster 208 for a data plane 210 and a cluster 214 for an application management control plane 216. That is, the hyperscale computing environment 200 has separate clusters 208, 214 for the data plane 210 and the application management control plane 216, rather than including them in the same cluster.

The cluster 208 and the cluster 214 each have respective orchestration control planes 220, 222. Again, the orchestration control planes 220, 222 are shown in simplified form, but can be configured as shown in FIG. 1 for the orchestration control plane 116. The orchestration control planes 220, 222 are shown as including operating systems 224 (corresponding to the operating system 122 of FIG. 1) and components 226, such as the administrative interface 130, the configuration/state store 132, the resource scheduler 136, and the state management component 138.

Taking the data plane cluster 208, the data plane 210 is also shown in simplified form, but can include the components of FIG. 1 for the data plane 120, including applications, such as containerized applications 230, 232, 234, which are hosted within pods 144 of FIG. 1, where the pods run within nodes 148 that include an operating system 152, shown as operating system 238 in FIG. 2.

The application management control plane 216 is shown in simplified form, and includes components of the application management control plane 118 of FIG. 1, such as applications in the form of containerized services, 250, 252, 254, which are hosted within pods 144 of FIG. 1, where the pods run within nodes 148 that include an operating system 160, shown as operating system 260.

Along with having the data plane 210 and the application management control plane 216 in separate clusters 208, 216, the hyperscale computing environment 200 differs from the cluster environment 100 in that each cluster 208, 216 includes a communication controller 270, 272, respectively. The communication controllers 270, 272 allow services 250-254 of the application management control plane 216 to manage client-facing applications 230-234 running on the data plane 210, but facilitate independent updates of various aspects of the clusters 208, 216 and their components. The communication controllers 270, 272 can perform routing using respective mapping information 276, 278.

The content of the mapping information 276, 278 can differ in various implementations. For example, in some cases, applications 250-254 of the application management control plane 216 can identify a particular endpoint for a communication, such as an identifier of an application 230-234. The mapping information 278 can map to a network address of the communication controller 270, and to a network address of an application 230-234, and the communication controller 270 can forward the communication to the application.

In other cases, a communication from an application 250-254 can include information sufficient to identify an application 230-234 to receive the communication. The mapping information 278 maps the communication to the correct cluster, such as to the communication controller 270, but does not include explicit routing information for the endpoint application 230-234. The communication controller 270 uses its mapping information 276 to determine the endpoint for the communication, such as an application 230-234, and sends the communication to the endpoint using the network address of the endpoint, stored in the mapping information.

In many cases, communications flow from the application management control plane 216 to the data plane 210, rather than being initiated by the data plane. However, in response to a communication from an application 250-254, an application 230-234 can send a communication to the communication controller 270 to be sent to an application 250-254. In some cases, the communication controller 270 uses the mapping information 276 to send the communication to the communication controller 272, which then uses its mapping information 278 to route the communication to a network address of an endpoint, such as an application 250-254. In other scenarios, the mapping information 276 can be used to provide a network address of the communication controller 272 and a network address of the endpoint, such as an application 250-254, where the communication controller 272 forwards the communication to the endpoint.

As described in Example 1, an issue with typical mixed-cluster systems is that updates to an orchestration control plane for a cluster that has both an application management control plane and a data plane result in applications or services in both planes being temporarily down. While it may be acceptable to have at least some downtime for the application management control plane, typically it is less acceptable to have downtime for client-facing applications. For example, it may be unacceptable for a credit card processing system to be down for a period of even a few minutes.

The strategies previously described can be used to avoid or minimize downtime, but typically at a significant computing resource cost, complexity, or increased latency. One strategy may be to delay updates as long as possible. Often, updates to the orchestration control plane or the applications or services of the application management control plane are provided more frequently than for data plane applications, partially because it is known that updating data plane applications can be more disruptive. However, in prior approaches, even though updates to the orchestration control plane or the application management control plane are available more frequently, in practice these are also delayed since they can also disrupt data plane applications. Delaying updates to orchestration control plane or application management control plane components because of concern for data plane application downtime means that there can be a significant delay in when new or improved features are available.

The hyperscale computing environment 200 avoids these issues by having separate clusters 208, 216 for the data plane 210 and the application management control plane 216. For example, the orchestration control plane 222 for the application management control plane 216 can be updated without having a negative impact on the data plane 210. That is, even if the application management control plane 216 is completely unavailable, applications of the data plane 210 can continue to operate uninterrupted, since the data plane cluster 208 remains online. While some application management functionality may be temporarily unavailable to the data plane 210, typically applications 230-234 of the data plane 210 can operate without continuous management. Further, the data plane 210 can include an operator, such as the operator 154, which can help maintain the data plane and its applications 230-234 in a desired state.

Alternatively, if the orchestration control plane 222 of the application management control plane 216 is to be updated, management of applications 230-234 of the data plane 210 can be transferred to an application management control plane of a different application management control plane cluster, whether an existing application management cluster or one created specifically to take over operations while the application management plane cluster 216 is offline, or at least not able to manage data plane applications 230-234 as effectively. Typically, creating a new instance of the application management plane cluster 216, or the orchestration control plane 222, is not as complex or resource intensive as for a cluster that also includes a data plane.

The use of separate clusters 208, 216 for the data plane 210 and application management control plane 216 provides similar benefits. Applications 250-254, such as those providing services, of the application management control plane 216 can be updated, and temporarily offline, without significantly affecting the applications 230-234 of the data plane 210, including through the use of an operator 154. As when updating the orchestration control plane 222, if an application 250-254 of the application management control plane 216 is to be taken offline or have reduced functionality, management responsibilities can at least be temporarily transferred to a management application or service running on another application management control plane cluster, or even another instance of the application management control plane within the application management control plane cluster 214.

The communication controllers 270, 272 facilitate communications between the clusters 208 and 216. That is, communications within a single cluster, having both an application management control plane and a data plane, can be conducted in a simpler way, including as facilitated by components of an orchestration management control plane. At the very least, having two clusters adds an additional layer of complexity, since communications now need to be routed from one cluster 208, 216 to the other, and then to the appropriate component of the destination cluster.

Having the communication controllers 270, 272 simplifies both inter-cluster communications, and subsequent intra-cluster communications. For example, the applications 250-254 of the application management control plane 216 (or applications 230-234 of the data plane 210) can require no, or minimal, modifications to allow management and data plane functionality to be implemented in different clusters.

Applications 250-254 of the control plane 216 may already, or can be easily modified to use, identifiers of a particular instance of a data plane and associated data plane application as part of standard management communications. Rather than burdening the applications 250-254 of the control plane 216 with storing and maintaining routing information for external clusters and components thereof, communications from the applications of the application management control plane can be routed to the communication controller 272, which maintains routing information, such as a mapping of destination data planes/applications to particular clusters and data plane and application instances.

The communication between the communication controllers 270, 272 can be achieved using various secure methods, including VPN/tunnel or encrypted HTTPS calls. These methods enable data transmitted between the clusters 208, 216 to be secure and protected from unauthorized access.

A VPN (Virtual Private Network) or tunnel creates a secure, encrypted connection over a less secure network, such as the internet. This method is particularly useful for connecting remote data centers or private clouds, allowing data transmitted between the control plane and data plane to be encrypted and secure. Generally, a VPN works by creating a secure tunnel between two endpoints over a public network. This tunnel encrypts all data passing through it, such that, even if the data is intercepted, it cannot be read without the encryption key.

VPNs use protocols such as IPsec (Internet Protocol Security) or OpenVPN to establish and maintain the secure connection. The VPN client on one end initiates the connection to the VPN server on the other end, which authenticates the client and establishes the encrypted tunnel. Once the tunnel is established, all data sent between the client and server is encrypted, providing a secure communication channel. The VPN/tunnel can be configured to be bidirectional, allowing data to flow both from the management plane to the data plane and from the data plane to the management plane. Alternatively, it can be unidirectional, where data flows only in one direction, either from the management plane to the data plane or from the data plane to the management plane, depending on the security requirements and use case.

Encrypted HTTPS (Hypertext Transfer Protocol Secure) calls use TLS (Transport Layer Security) to encrypt data transmitted over HTTP, providing secure communication. This method is suitable for secure communication over the internet or within a cloud infrastructure where HTTPS is already a standard protocol. When a client (such as a web browser) connects to a server using HTTPS, the server presents a digital certificate to the client to verify its identity. The client and server then perform a TLS handshake, during which they agree on encryption algorithms and exchange encryption keys. Once the handshake is complete, all data transmitted between the client and server is encrypted using the agreed-upon keys. Thus, the data cannot be read or tampered with by unauthorized parties. Similar to VPN/tunnel, HTTPS communication can be configured to be bidirectional or unidirectional. In a bidirectional setup, data can flow freely between the management plane and data plane, while in a unidirectional setup, data flows in a single direction, enhancing security by limiting the direction of data flow.

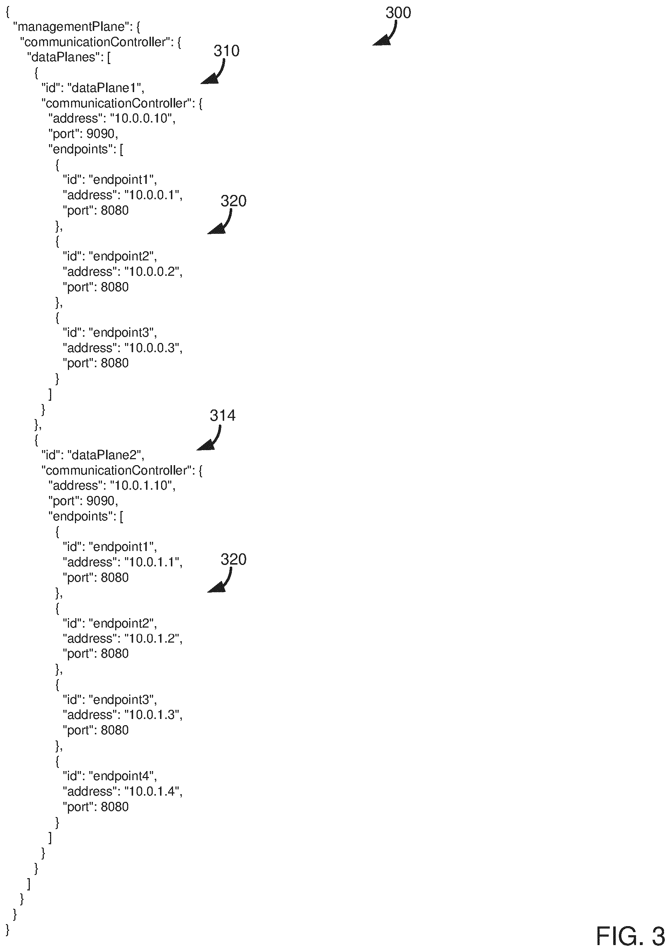

FIG. 3 provides example JSON code 300 for storing routing information of a communication controller of an application management control plane. The code 300 includes routing information 310 for a first data plane and routing information 314 for a second data plane. The routing information 310, 314 includes an IP address and port for the communication controller of the destination data plane. Within the routing information 310, 314, end point routing information 320 is provided, which provides the address and port for particular endpoints within a destination plane, such as for a particular application running in the data plane. In this embodiment, the destination communication controller can simply forward a communication to a particular endpoint based on the routing information that can be included by the sending communication controller.

The code below represents an example "raw" command that can be issued by an application 250-254 of the application management control plane 216 of FIG. 2.

```
       {
        "action": "start_backup",
        "endpoint": "endpoint1"
       }
```

When the sending communication controller receives the command, it can analyze the code 300 to determine the routing information for the data plane and endpoints, and send a message to the destination communication controller. The following code represents a communication from the sending controller to the receiving controller based on the raw command above.

```
       {
        "destination": {
         "dataPlaneld": "dataPlane1",
         "communicationController": {
          "address": "10.0.0.10",
          "port": 9090
         },
         "endpoint": {
          "address": "10.0.0.1",
          "port": 8080
         }
        },
        "payload": {
         "action": "start-backup"
        }
       }
```

The receiving communication controller can receive this message, and then generate a message to be sent internally to the endpoint, such as:

```
       {
        "destination": {
         "address": "10.0.0.1",
         "port": 8080
        },
        "payload": {
         "action": "start_backup"
        }
       }
```

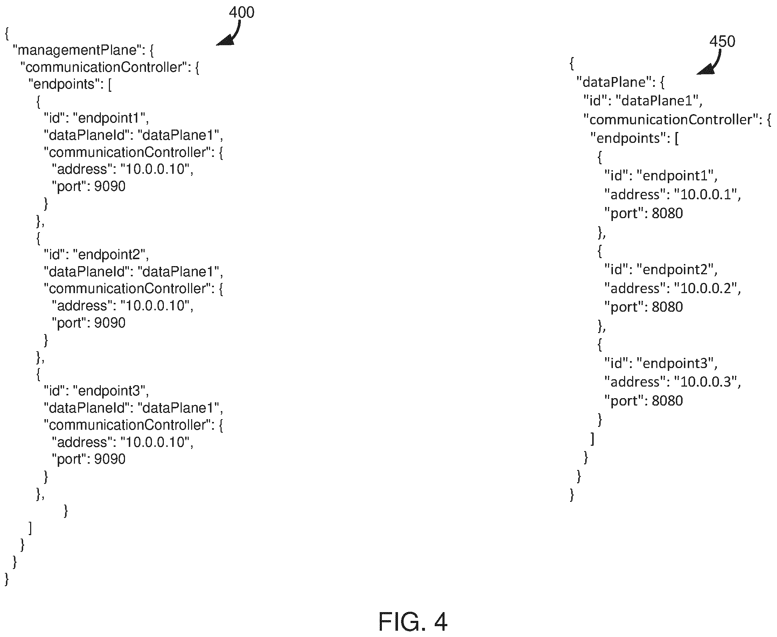

Routing information for a sending communication controller and can differ from that shown in the code 300. That is, the code 300 illustrates the sending communication controller having information both for a destination communication controller, at a destination data plane for example, and individual endpoints within the destination. In another embodiment, the sending communication controller maintains routing information for destination communication controllers, but the destination communication controller maintains routing information for internal endpoints. FIG. 4 illustrates example code 400 that can be used to maintain routing information by a sending communication controller. FIG. 4 also illustrates example code 450 that can be used to maintain internal routing information to be used by the destination communication controller.

In practice, the sending communication controller can process the raw command shown above, and determine routing information for the endpoint specified in the raw command from the code 400, and generate a message, such as the example below, to be send to the destination communication controller:

```
       {
        "destination": {
         "dataPlaneld": "dataPlane1",
         "communicationController": {
          "address": "10.0.0.10",
          "port": 9090
         }
        },
        "payload": {
         "action": "start_backup",
         "endpoint": "endpoint1"
        }
       }
```

When the destination communication controller receives the message, it can analyze the routing information in the code 450 to determine the address and port associated with the specified endpoint, and then generate a message to be sent to the endpoint, such as:

```
       {
        "destination": {
         "address": "10.0.0.1",
         "port": 8080
        },
        "payload": {
         "action": "start-backup"
        }
       }
```

While either approach can be used, one advantage of the approach of storing explicit routing information for particular destination planes for use by a communication controller rather than also storing explicit routing information for endpoints as well is that this approach can more efficiently use computing resources and be less prone to error. That is, routing addresses and ports for endpoints can be changed at the destination plane, and the information available to the communication controller of the sending plane need not be updated. The information used by the sending plane only needs to be updated if routing information for a destination plane changes, or if there are changes to endpoints of the destination system, such as the addition or removal of an endpoint, or a change in an endpoint identifier.

### Example 4 - Example Read-Only Management of Data Plane Applications

In some implementations, a data plane in a data plane cluster can be made "read only" in terms of performing management functions, including states to be maintained by an operator associated with the data plane. "Administratively controlled" or "management-restricted" are other terms that can be used to express this "read only" aspect. As the term relates to management functionality, it does not require that only read operations be performed by a data plane application. For example, when a database application serves as a data plane application, the database application can read data from database tables, as well as write new data to the database tables.

Assume, however, that the database application is managed by an application or service of an application management control plane on an application management control plane cluster. A backup service of the application management control plane can initiate backup processes for the database application. Backup operations are not initiated from within the data plane cluster, or from other sources.

Having a read only data plane can be advantageous, including because users with access to the data plane do not have access to management services of the application management control plane, which can, for example, make code more secure, both from malicious tampering and from reverse engineering standpoints. If a user of the data plane "escapes" from security constraints in the data plane, they still do not have access to management functionality, as that functionality is maintained in a separate cluster. Similarly, typically management functionality includes the use of permissions information or other types of access controls, which can be maintained on the application management control plane cluster, to which users of the data plane do not have access. Thus, if a user of the data plane managed to "escape" from specified functionality to access other information in the data plane cluster, the user would not be able to access the authorization information, which is in a separate cluster. This approach is useful, as it can limit lower trust level access only to the data plane.

### Example 5 - Example Cluster Deployments

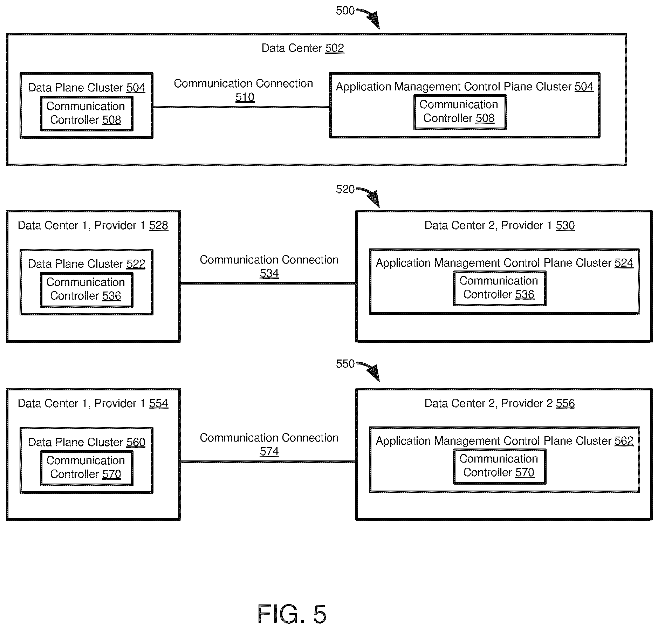

Disclosed techniques can be flexible in where the data plane clusters and the application management control plane clusters are located. These options are illustrated in FIG. 5. Deployment option 500 represents a scenario, further simplifying the details of the clusters and their associated planes, where a data plane cluster 504 and an application management control plane cluster 506 are located within the same data center 502. The data plane cluster 504 and the application management control plane cluster 506 can communicate through their respective communication controllers 508 over a communication connection 510, such as using HTTPS or a VPN. Typically, this deployment option uses the infrastructure and services provided by a single hyperscale provider, such as AWS, Azure, or Google Cloud, to host both clusters within the same physical location.

The separation between the data plane and the application management control plane is achieved through logical boundaries, including network segmentation, access controls, and possibly different virtual networks within the same data center. This configuration simplifies infrastructure management while providing the benefits of separation, such as enhanced security and the ability to update the application management control plane without impacting the data plane. For example, both clusters can be deployed in the same AWS region, using different Virtual Private Clouds (VPCs) to isolate the data plane from the management plane.

The other two deployment options involve having data planes and application management control planes located on different data centers, such as shown for deployment option 520. The different data centers can be located in different regions or availability zones. In the deployment option 520, a data plane cluster 522 and the application management control plane cluster 524 are in different data centers 528, 530, but both managed by the same hyperscale service provider. The separation is both physical and logical, where again the data plane cluster 522 and the application management control plane cluster 524 can communicate using a communication connection 534, such as a VPN or encrypted HTTPS calls, to connect their respective communication controllers 536.

The third deployment option, 550, is generally the same as the deployment option 520, but here the data centers 554, 556 hosting, respectively, the data plane cluster 560 and the application management control plane cluster 562, are associated with different hyperscale service providers. Again, the separation is both physical and logical, with potential additional complexity due to the involvement of multiple providers. The clusters 560, 562 can communicate using their respective communication controllers 570 over a communication connection 574.

### Example 6 - Example Interactions of Single Cluster with Multiple Clusters

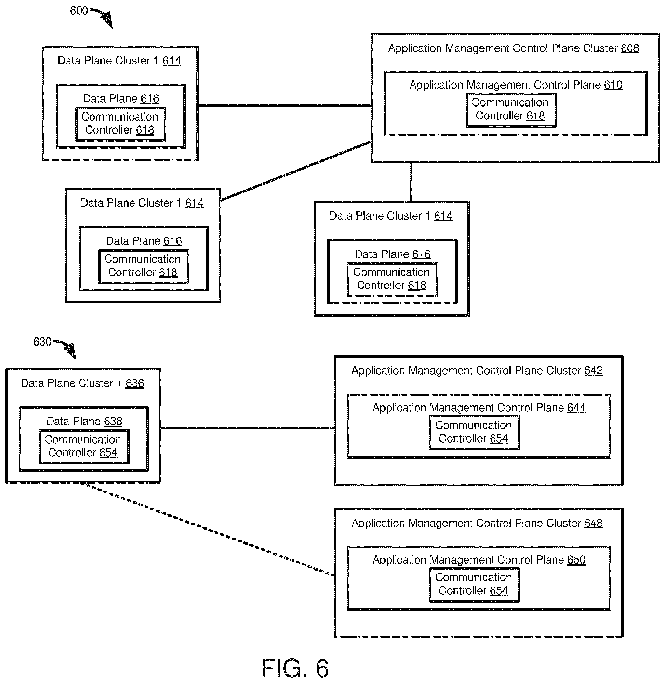

As previously explained, a given application management control plane in an application management control plane cluster can service one or more data planes, including their constituent applications. In addition, a given data plane can potentially be serviced by multiple application management control planes of corresponding application management control plane clusters. These scenarios are illustrated in FIG. 6.

A computing environment 600, shown in simplified form, illustrates an application management control plane 610 of an application management control plane cluster 608 in communication with multiple data planes 616 of corresponding data plane clusters 614. This scenario helps reduce computing overhead by using a single application management control plane 608 to manage applications of multiple data planes 616. The use of the communication controllers 618 facilitates these interactions, including by reducing routing overhead.

Also in FIG. 6, a computing environment 630 shows a data plane 638 of a data plane cluster 636 in communication with an application management control plane 644 of an application management control plane cluster 642 and with an application management control plane 650 of an application management control plane cluster 648. Typically, at any given time, an application of the data plane 638 is managed by only one of the application management control planes 644, 650. Management responsibilities can pass between the application management control planes 644, 650. At a first point in time, for example, an application of the data plane 638 may be managed by the application management control plane 644. However, an orchestration control plane (not shown) of the application management control plane 644, or management applications or services, can be updated. At least while the update process is being performed, management responsibility can pass to the application management control plane 650. Communication controllers 654 facilitate communications between the application management control planes 644, 650 and the data plane 638.

### Example 7 - Example Restricted Access Data Plane Cluster

Typically, applications and services of an application management control plane proactively control data plane applications. However, in some scenarios, it can be desirable to limit access to a data plane. For example, certain government operations may maintain highly confidential data, and wish to limit access to the data plane to those outside an organization, including to a software provider who provides, or at least manages, applications executing in the data plane.

As described earlier, communication connections can be bidirectional or unidirectional. In the scenario described above, it can be beneficial to have a unidirectional communication through which the data plane can contact the application management control plane. For example, users of, or processes executing on, the data plane can determine that it is desired to have management services provided, such as database backup. For example, backups can be scheduled at the data plane, and when a scheduled backup is to be executed, the data plane can contact the application management control plane to begin a backup process. The communication connection can then be closed, such that the application management control plane cannot access the data plane.

In other scenarios, applications or services of the application management control plane can store operations to be performed on the data plane. When the data plane opens a connection to the application management control plane, the application management control plane can send these operations to be performed at the data plane. After the operations are completed, the data plane can close the communication connection with the application management control plane.

### Example 8 - Example Operations

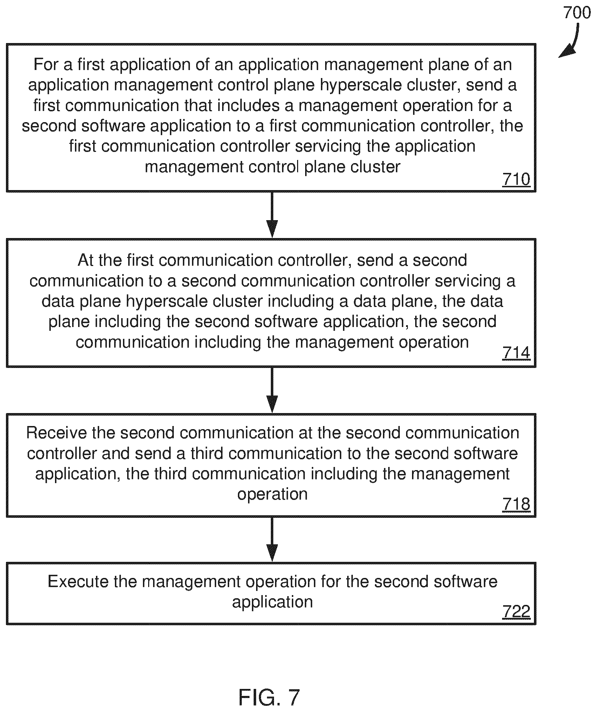

FIG. 7 provides a flowchart of a process 700 of a method implemented in a computing environment that includes at least one hardware processor and at least one memory coupled to the at least one hardware processor. At 710, for a first application of an application management plane of an application management control plane hyperscale cluster, a first communication that includes a management operation for a second software application is sent to a first communication controller. The first communication controller services the application management control plane cluster.

A second communication is sent at 714 from the first communication controller to a second communication controller servicing a data plane hyperscale cluster. The data plane includes the second software application, and the second communication includes the management operation. At 718, the second communication controller receives the second communication and sends a third communication to the second software application. The third communication includes the management operation. The management operation is executed for the second software application at 722.

### Example 9 - Additional Examples

Example 1 is a computing environment that includes a first data plane hyperscale cluster. This first data plane hyperscale cluster includes a first plurality of physical servers, virtual servers, or a combination thereof. The first data plane hosts a first software application and does not include an application management control plane that supports operations of the first software application. The first data plane hyperscale cluster also includes a first communication controller.

The computing environment includes an application management control plane cluster. This cluster includes a second plurality of physical servers, virtual servers, or a combination thereof. The application management control plane cluster hosts a second software application that supports operations of the first software application and does not include the first software application. The application management control plane cluster also includes a second communication controller that is in communication with the first communication controller. The second communication controller receives an operation from the second software application and routes the operation to the first communication controller, which then routes the operation to the first software application.

Example 2 is the computing environment of Example 1, further including a first orchestration control plane in the first data plane hyperscale computing cluster and a second orchestration control plane in the application management control plane hyperscale computing cluster. The second orchestration control plane is different from the first orchestration control plane.

Example 3 is the computing environment of Example 1 or Example 2, where the second communication controller includes routing information that associates the first application with the first communication controller.

Example 4 is the computing environment of Example 3, where the routing information includes an address of the first application.

Example 5 is the computing environment of Example 3, wherein the first communication controller comprises routing information that includes an address of the first application.

Example 6 is the computing environment of any of Examples 1-5, further including a second data plane hyperscale cluster. This second data plane hyperscale cluster includes a third plurality of physical servers, virtual servers, or a combination thereof. The second data plane hosts a third software application and does not include an application management control plane that supports operations of the third software application. The second data plane hyperscale cluster also includes a third communication controller.

The second communication controller receives an operation from a fourth software application of the application management control plane and routes the operation to the third communication controller, which then routes the operation to the third software application. The fourth software application is either the second software application or a software application other than the first, second, or third software applications.

Example 7 is the computing environment of any of Examples 1-5, where only the application management control plane provides management operations for the first software application.

Example 8 is a method implemented in a computing environment that includes at least one hardware processor and at least one memory coupled to the at least one hardware processor. The method includes, for a first application of an application management plane of an application management control plane hyperscale cluster, sending a first communication that includes a management operation for a second software application to a first communication controller. The first communication controller services the application management control plane cluster. A second communication is sent from the first communication controller to a second communication controller servicing a data plane hyperscale cluster. The data plane includes the second software application, and the second communication includes the management operation. The second communication controller receives the second communication and sends a third communication to the second software application. The third communication includes the management operation, which is then executed for the second software application.

Example 9 is the method of Example 8, further including sending a third communication from the second communication controller to the first communication controller requesting management operations for the second application. The second communication is sent in response to the first communication controller receiving the third communication.

Example 10 is the method of Example 9, where the first communication controller only sends communications to the second communication controller in response to a communication from the second communication controller to the first communication controller.

Example 11 is the method of any of Examples 8-10, further including performing an update of the application management control plane cluster. The update makes the first software application temporarily unavailable to perform management operations for the second software application. The second software application remains operational while the first software application is temporarily unavailable.

Example 12 is the method of Example 11, further including sending management operations for the second software application to the data plane from another application management control plane cluster while the first software application is temporarily unavailable.

Example 13 is the method of any of Examples 8-12, further including generating an application management operation for the second application at the data plane. The method also includes determining that the application management operation for the second application was generated at the data plane. In response to this determination, the method includes not executing the application management operation on the second application.

Example 14 is the method of any of Examples 8-13, where the data plane is a first data plane and the data plane hyperscale computing cluster is a first data plane hyperscale computing cluster. The method further includes, for a third software application of the application management control plane, sending a third communication that includes a management operation for a fourth software application to the first communication controller. The third software application is either the first software application or a software application other than the first and second software applications. The fourth software application is either the second software application or a software application other than the first, second, and third software applications. A fourth communication is sent from the first communication controller to a third communication controller for a second data plane hyperscale computing cluster. This second data plane hyperscale computing cluster includes a second data plane, which is different from the first data plane.

Example 15 is one or more computer-readable storage media, collectively including various computer-executable instructions. When executed in a computing environment that includes at least one hardware processor and at least one memory coupled to the at least one hardware processor, these instructions cause the computing environment to execute various operations. For a first application of an application management plane of an application management control plane hyperscale cluster, a first communication is sent that includes a management operation for a second software application to a first communication controller. The first communication controller services the application management control plane cluster.

At the first communication controller, a second communication is sent to a second communication controller servicing a data plane hyperscale cluster including a data plane. The data plane includes the second software application, and the second communication includes the management operation. The second communication is received at the second communication controller, which sends a third communication to the second software application. The third communication includes the management operation. The management operation is executed for the second software application.

Example 16 is the one or more computer-readable storage media of Example 15, further collectively including computer-executable instructions that, when executed in the computing environment, cause the computing environment to send a third communication from the second communication controller to the first communication controller requesting management operations for the second application. The sending of the second communication is performed in response to the first communication controller receiving the third communication.

Example 17 is the one or more computer-readable storage media of Example 16, where the first communication controller only sends communications to the second communication controller in response to a communication from the second communication controller to the first communication controller.

Example 18 is the one or more computer-readable storage media of any of Examples 15-17, further collectively including computer-executable instructions that, when executed in the computing environment, cause the computing environment to perform an update of the application management control plane cluster. The update makes the first software application temporarily unavailable to perform management operations for the second software application. The second software application remains operational while the first software application is temporarily unavailable.

Example 19 is the one or more computer-readable storage media of Example 18, further collectively including computer-executable instructions that, when executed in the computing environment, cause the computing environment to, while the first software application is temporarily unavailable, send management operations for the second software application to the data plane from another application management control plane cluster.

Example 20 is the one or more computer-readable storage media of any of Examples 15-19, further collectively including computer-executable instructions that, when executed in the computing environment, cause the computing environment to generate an application management operation for the second application at the data plane. It is determined that the application management operation for the second application was generated at the data plane. In response to this determination, the instructions cause the computing environment to not execute the application management operation on the second application.

### Example 10 - Computing Systems

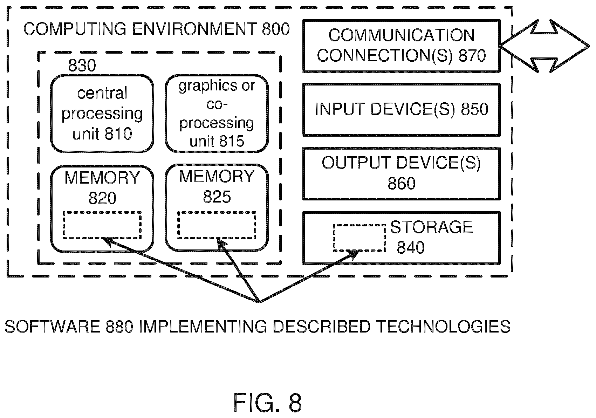

FIG. 8 depicts a generalized example of a suitable computing system 800 in which the described innovations may be implemented. The computing system 800 is not intended to suggest any limitation as to scope of use or functionality of the present disclosure, as the innovations may be implemented in diverse general-purpose or special-purpose computing systems.

With reference to FIG. 8, the computing system 800 includes one or more processing units 810, 815 and memory 820, 825. In FIG. 8, this basic configuration 830 is included within a dashed line. The processing units 810, 815 execute computer-executable instructions, such as for implementing the features described in Examples 1-9. A processing unit can be a general-purpose central processing unit (CPU), processor in an application-specific integrated circuit (ASIC), or any other type of processor. In a multi-processing system, multiple processing units execute computer-executable instructions to increase processing power. For example, FIG. 8 shows a central processing unit 810 as well as a graphics processing unit or co-processing unit 815. The tangible memory 820, 825 may be volatile memory (e.g., registers, cache, RAM), non-volatile memory (e.g., ROM, EEPROM, flash memory, etc.), or some combination of the two, accessible by the processing unit(s) 810, 815. The memory 820, 825 stores software 880 implementing one or more innovations described herein, in the form of computer-executable instructions suitable for execution by the processing unit(s) 810, 815.

A computing system 800 may have additional features. For example, the computing system 800 includes storage 840, one or more input devices 850, one or more output devices 860, and one or more communication connections 870, including input devices, output devices, and communication connections for interacting with a user. An interconnection mechanism (not shown) such as a bus, controller, or network interconnects the components of the computing system 800. Typically, operating system software (not shown) provides an operating environment for other software executing in the computing system 800, and coordinates activities of the components of the computing system 800.

The tangible storage 840 may be removable or non-removable, and includes magnetic disks, magnetic tapes or cassettes, CD-ROMs, DVDs, or any other medium which can be used to store information in a non-transitory way and which can be accessed within the computing system 800. The storage 840 stores instructions for the software 880 implementing one or more innovations described herein.

The input device(s) 850 may be a touch input device such as a keyboard, mouse, pen, or trackball, a voice input device, a scanning device, or another device that provides input to the computing system 800. The output device(s) 860 may be a display, printer, speaker, CD-writer, or another device that provides output from the computing system 800.

The communication connection(s) 870 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 11 - Cloud Computing Environment

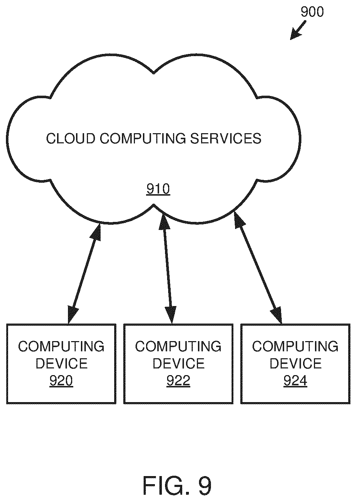

FIG. 9 depicts an example cloud computing environment 900 in which the described technologies can be implemented. The cloud computing environment 900 comprises cloud computing services 910. The cloud computing services 910 can comprise various types of cloud computing resources, such as computer servers, data storage repositories, networking resources, etc. The cloud computing services 910 can be centrally located (e.g., provided by a data center of a business or organization) or distributed (e.g., provided by various computing resources located at different locations, such as different data centers and/or located in different cities or countries).
The cloud computing services 910 are utilized by various types of computing devices (e.g., client computing devices), such as computing devices 920, 922, and 924. For example, the computing devices (e.g., 920, 922, and 924) can be computers (e.g., desktop or laptop computers), mobile devices (e.g., tablet computers or smart phones), or other types of computing devices. For example, the computing devices (e.g., 920, 922, and 924) can utilize the cloud computing services 910 to perform computing operations (e.g., data processing, data storage, and the like).

### Example 12 - Implementations

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example and with reference to FIG. 8, computer-readable storage media include memory 820 and 825, and storage 840. The term computer-readable storage media does not include signals and carrier waves. In addition, the term computer-readable storage media does not include communication connections (e.g., 870).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network, or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C++, Java, Perl, JavaScript, Python, Ruby, ABAP, SQL, Adobe Flash, or any other suitable programming language, or, in some examples, markup languages such as html or XML, or combinations of suitable programming languages and markup languages. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computing environment comprising:
a first data plane hyperscale cluster comprising (1) a first plurality of physical servers, virtual servers, or a combination thereof, where the first data plane computing cluster has a first data plane that hosts a first software application, where the first data plane hyperscale cluster does not include an application management control plane that includes a software application that supports operations of the first software application, and (2) a first communication controller; and
an application management control plane cluster comprising (1) a second plurality of physical servers, virtual servers, or a combination thereof, where the application management control plane cluster has a first application management control plane that hosts a second software application that supports operations of the first software application and does not include the first software application, and (2) a second communication controller in communication with the first communication controller, wherein the second communication controller receives an operation from the second software application and routes the operation to the first communication controller, where the first communication controller then routes the operation to the first software application.

2. The computing environment of claim 1, wherein the first data plane hyperscale computing cluster comprises a first orchestration control plane and the application management control plane hyperscale computing cluster comprises a second orchestration control plane, different than the first orchestration control plane.

3. The computing environment of claim 1 or 2, wherein the second communication controller comprises routing information that associates the first application with the first communication controller.

4. The computing environment of claim 3, wherein the routing information comprises an address of the first application.

5. The computing environment of claim 3, wherein the first communication controller comprises routing information comprising an address of the first application.

6. The computing environment of any one of claims 1 to 5, further comprising:
a second data plane hyperscale cluster comprising (1) a third plurality of physical servers, virtual servers, or a combination thereof, wherein the second data plane hyperscale cluster comprising a second data plane that hosts a third software application, where the second data plane hyperscale cluster does not include an application management control plane that includes a software application that supports operations of the third software application, and (2) a third communication controller; and
wherein the second communication controller receives an operation from a fourth software application of the application management control plane and routes the operation from the fourth software application to the third communication controller, where the third communication controller then routes the operation to the third software application, wherein the fourth software application is the second software application or is a software application other than the first, second, or third software applications.

7. The computing environment of any one of claims 1 to 6, wherein only the application management control plane provides management operations for the first software application.

8. A method, implemented in a computing environment comprising at least one hardware processor and at least one memory coupled to the at least one hardware processor, the method comprising:
for a first application of an application management plane of an application management control plane hyperscale cluster, sending a first communication that comprises a management operation for a second software application to a first communication controller, the first communication controller servicing the application management control plane cluster;
at the first communication controller, sending a second communication to a second communication controller servicing a data plane hyperscale cluster comprising a data plane, the data plane comprising the second software application, the second communication comprising the management operation;
receiving the second communication at the second communication controller and sending a third communication to the second software application, the third communication comprising the management operation; and
executing the management operation for the second software application.

9. The method of claim 8, further comprising:
sending a third communication from the second communication controller to the first communication controller requesting management operations for the second application, wherein the sending the second communication is performed in response to the first communication controller receiving the third communication.

10. The method of claim 8 or 9, wherein the first communication controller only sends communications to the second communication controller in response to a communication from the second communication controller to the first communication controller.

11. The method of any one of claims 8 to 10, further comprising:
performing an update of the application management control plane cluster, the update making the first software application temporarily unavailable to perform management operations for the second software application, wherein the second software application remains operational while the first software application is temporarily unavailable.

12. The method of claim 11, the operations further comprising:
while the first software application is temporarily unavailable, sending management operations for the second software application to the data plane from another application management control plane cluster.

13. The method of any one of claims 8 to 12, further comprising:
generating an application management operation for the second application at the data plane;
determining that the application management operation for the second application was generated at the data plane;
in response to determining that the application management operation for the second application was generated at the data plane, not executing the application management operation on the second application.

14. The method of any one of claims 8 to 13, wherein the data plane is a first data plane and the data plane hyperscale computing cluster is a first data plane hyperscale computing cluster, the method further comprising:
for a third software application of the application management control plane, sending a third communication that includes a management operation for a fourth software application to the first communication controller, wherein the third software application is the first software application is a software application other than the first software application and the second software application and the fourth software application is the second software application or is a software application other than the first software application, the second software application, and the third software application; and
at the first communication controller, sending a fourth communication to a third communication controller to a second data plane hyperscale computing cluster comprising a second data plane, where the second data plane is different from the first data plane and the second data plane hyperscale computing cluster is different than the first data plane hyperscale computing cluster and the second data plane is different than the first data plane.

15. One or more computer-readable storage media, collectively comprising:
computer-executable instructions that, when executed in a computing environment comprising at least one hardware processor and at least one memory coupled to the at least one hardware processor, cause the computing environment to perform the method of any one of claims 8 to 14.
